# DEMANDE DE BREVET EUROPEEN

(11) **EP 1 661 874 A1**
(43) Date de publication de la demande: **31.05.2006**
(21) Numéro de dépôt: 04292781.4
(22) Date de dépôt: 25.11.2004
(51) Int. Cl.: C04B 41/53

(54) **Composition désactivante de surface pour béton ou mortier comprenant un tensio-actif non ionique.**

(71) Demandeur: Sika Technology AG, 6340 Baar (CH)
(72) Inventeur: Burgals Frédéric, 30560 Saint-Hilaire de Brethmas (FR); Chaignon, Joel, 27630 Ecos (FR)
(74) Mandataire: Isler, Jörg

(57) **Abrégé**

La présente invention a pour objet une composition désactivante de surface pour béton ou mortier comprenant au moins un retardateur de prise et au moins un tensio-actif non ionique, ainsi qu'un procédé d'application d'une telle composition.

## Description

La présente invention concerne une composition désactivante de surface de béton ou mortier, un procédé d'obtention d'un béton ou mortier désactivé à l'aide de cette composition et leurs utilisations.

Les bétons ou mortiers désactivés sont des matériaux dans lesquels la couche de ciment superficielle a été éliminée pour laisser apparaître en relief les granulats et permettre d'obtenir un effet esthétique.

En effet, pour les bétons usuels, l'aspect de surface est déterminé soit par la qualité du moule (surfaces verticales et fond de moule), soit par la qualité des finitions des surfaces obtenues par talochage (surfaces horizontales). L'aspect qui en résulte est généralement celui d'un béton lisse dont la couleur est essentiellement déterminée par celle du ciment. Pour certaines applications comme la voirie et les éléments de façade, il est intéressant de proposer des bétons qui, tout en conservant leurs performances structurelles, présentent une variété d'aspects élargie. Ainsi, pour faire apparaître les granulats, les méthodes les plus utilisées dans les industries de la préfabrication du béton et du béton prêt à l'emploi ainsi que pour les bétons préparés sur chantier consistent soit à reprendre la surface du béton (après durcissement et éventuellement démoulage) en utilisant des moyens mécaniques, soit à « désactiver » la surface du béton pendant la période de durcissement en utilisant des retardateurs chimiques appelés « retardateurs superficiels» ou « désactivants de surface ».

Les bétons destinés à être désactivés doivent de préférence présenter une répartition granulométrique des granulats particulière dans le but d'assurer une régularité de leur aspect lorsque ceux-ci sont visibles en surface.

Ces précautions prises, la désactivation consiste à appliquer sur la surface du béton frais ou sur la surface du moule destiné à recevoir le béton frais, un composé ayant un effet retardant sur la prise du ciment correspondant à un « retardateur superficiel ». Le retardateur superficiel doit être en concentration telle que son effet retard se situe dans les premiers millimètres en profondeur. Ainsi, seule la couche de surface du béton aura un temps de prise différé. Le corps du béton quant à lui fera prise normalement. Lorsque le corps du béton aura suffisamment durci, un nettoyage à l'eau de sa surface (éventuellement sous pression)- ou « délavage »- est opéré. N'ayant pas encore fait prise, la couche de surface est éliminée laissant apparaître les granulats tout en les laissant solidaires de l'ensemble.

Parmi les retardateurs superficiels, on peut citer notamment les gluconates ou les résines aminoplastes cycliques décrits dans le brevet EP 0 697 381 B1, ou encore les acides carboxyliques décrits dans la demande de brevet EP 1 281 698 A1.

Cependant, avec les retardateurs superficiels actuels, le créneau pour effectuer le nettoyage de la couche de surface est très court et fluctue en fonction des conditions de température environnementale. Dans des conditions de température élevées (30 à 40°C), la durée d'action des retardateurs est de l'ordre de 12h et dans des conditions de faibles températures (5 à 10°C), cette durée d'action est de l'ordre de 36h. Dans le même temps, le temps de prise du corps du béton va également varier dans ces mêmes conditions de températures. Au final, et à une plage de température donnée, la plage d'intervention pour procéder à l'étape de nettoyage de la couche de surface, à savoir lorsque la prise du corps du béton est suffisante et celle de la couche de surface est incomplète, est de l'ordre de 2 à 3 heures dans des conditions de températures élevées et de l'ordre de 4 à 6 heures dans des conditions de faibles températures. Ces plages d'interventions relativement courtes entraînent des contraintes importantes sur les chantiers puisqu'elles imposent d'effectuer des tests à fréquence régulière sur des zones témoins. En outre, elles nécessitent la présence permanente d'un opérateur, parfois même la nuit, et l'immobilisation du matériel de nettoyage (nettoyeur haute pression) dans le même temps.

De façon surprenante, la Demanderesse a pu mettre en évidence que l'addition d'un tensio-actif non ionique à un retardateur superficiel permet d'obtenir une composition de désactivant de surface dont la durée d'action est beaucoup plus longue que celles des compositions de désactivant de l'art antérieur ce qui permet d'avoir une plage d'utilisation bien plus importante. Les durées d'action et les plages d'utilisation obtenues avec la composition selon l'invention en fonction de la température sont décrites dans le tableau I ci-dessous.

**Tableau I**

| Température (°C) | Durée d'action (jours) | Plage d'utilisation (jours) |
|---|---|---|
| 5 à 10 | 5 | 1,5 à 5 |
| 20 | 10 | 1 à 10 |
| 30 à 40 | 15 | 1 à 15 |

En conséquence, un premier objet de l'invention correspond à une composition désactivante de surface pour béton ou mortier comprenant au moins un retardateur superficiel, caractérisée en ce qu'elle comprend en outre un tensio-actif non ionique.

A titre de tensio-actif non ionique, on peut citer à titre d'exemple les esters de polyéthylène glycols, les esters d'acides gras, les éthoxylates (éthers polyoxyéthylénés ou polypropylénés d'alcools gras ou d'acides gras),les esters du saccharose, du sorbitol et du pentaerythritol et enfin les dérivés oxyéthylénés ou propylénés des amines, des amides, des amino-alcools et des esters d'acides gras.

Selon un mode de réalisation préféré de l'invention, le tensio-actif est choisi parmi les éthoxylates d'alcools linéaires ou ramifiés primaires ou secondaires en C_{12-18'} tels que des alcools gras naturels ou synthétiques, des alkylphénols branchés avec des groupes octyls, nonyls ou dodécyls, des acides gras, des amines grasses et des esters d'acides gras, de préférence parmi les éthoxylates aromatiques et les alkyls phénol branchés.

Selon un deuxième mode de réalisation préféré de l'invention, le tensio-actif est un ester d'acide gras en C₁₆₋₁₈ saturé ou non, oxyéthyléné ou oxypropyléné.

Selon un troisième mode de réalisation préféré de l'invention, le tensio-actif est un ester d'acide gras de formule générale 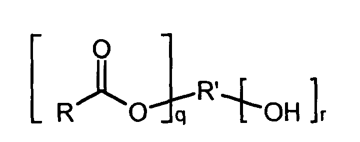 dans lequel, R est choisi parmi un alkyl ou un alcényl avec un nombre de carbone compris entre 2 et 20, et R' est un polyol P ayant q+r groupes hydoxyl, dont tous les groupes hydroxyles sont éliminés. De préférence, ledit polyol P est choisi parmi l'éthylène glycol, le propylène glycol, le sorbitol, le glucose, le glucoside, le saccharose, le pentaérythritol, le triméthylolpropane et la glycérine. De préférence, la somme de q et r est un entier compris entre 2 et 8, notamment 2, 3 ou 4. De préférence q est 1, 2, 3 ou 4. De préférence, r est égal à 0 ou 1.

De préférence, l'ester d'acide gras est choisi parmi l'ester de l'acide stéarique, de l'acide oléique et des acides gras d'huiles végétales.

La quantité (en poids) de tensio-actif dans la composition est comprise entre 0,2 et 5%, de préférence entre 0,3 et 3%. Sauf spécification contraire, les quantités des différents constituants de la composition selon l'invention sont exprimées en pourcentage du poids de chacun desdits constituants par rapport au poids total de la composition.

A titre de retardateur superficiel, on peut citer notamment un phosphate, un aminophénol, un hydrate de carbone, un acide ou un sel d'acide carboxylique ou hydrocarboxylique, tel que l'acide gluconique ou glucoheptonique, le gluconate ou le glucoheptonate de sodium.

Selon un mode de réalisation préféré de l'invention, le retardateur superficiel est un hydrate de carbone tel qu'un ose de formule générale Cₙ(H₂O)ₙ avec n=5 ou 6, tel que le glucose (n=6), un oside qui résulte de la condensation de deux oses, tel que le saccharose, le lactose et le maltose, ou un polysaccharide de formule générale (C₆H₁₀O₅)_{n'} avec n' compris entre 2 et 10, et les mélanges de ces sucres.

Selon un deuxième mode de réalisation préféré de l'invention, le retardateur superficiel est un acide carboxylique ou un sel d'un tel acide carboxylique.

A titre d'exemple d'acide carboxylique ou de leurs sels, on peut citer à titre d'exemple les acides carboxylés aromatiques de formule générale R''-C₆H₄-COOH, dans laquelle R'' est choisi parmi H, OH, CH₃-COO, C₂H₅O et les acides carboxyliques de formule générale R' ' '-COOH, dans laquelle R''' est choisi parmi COOH et CR₁R₂R₃, avec R₁ choisi parmi H et CH₂-COOH ; R₂ choisi parmi H et OH ; et R₃ choisi parmi H, CH₃, -(CHOH)ₓ-CH₂OH et - (CHOH)ₓ-COOH où x est un entier de 1 à 3.

De préférence, le retardateur superficiel est choisi parmi l'acide oxalique, succinique, malique, tartrique, citrique, gluconique et leurs sels.

Selon un troisième mode de réalisation préféré de l'invention, le retardateur superficiel est un aminophénol ou dérivé de celui-ci tel que le para-, l'ortho- et le méta-aminophénol et le N-acétyl aminophénol.

La quantité (en poids) de retardateur superficiel dans la composition est comprise entre 0,05 et 25%, de préférence entre 0,1 et 15% et de manière particulièrement préférée entre 0,2 et 10%.

Avantageusement, la composition désactivante de surface pour béton ou mortier selon l'invention comprend en outre au moins un polyol.

A titre d'exemple de polyols utilisables dans la composition selon l'invention, on peut citer un polyéther polyol, un polyéther polyol modifié contenant une polyurée ou un polyuréthanne en dispersion, un polyéther modifié polyvinyl, un polyester polyol, un polycarbonate polyol, un polycaprolactone polyol ou un glycol. De préférence, le polyol a un poids moléculaire inférieur à 2000 g/mole et il est choisi parmi un polyéther polyol, un polyester polyol et un glycol. Préférentiellement encore, le polyol est un polyéther polyol de poids moléculaire compris entre 50 et 500g/mole.

De préférence, le polyol est choisi parmi un triol et un diol.

De préférence, la composition selon l'invention comprend un mélange de polyol, et de manière particulièrement préférée un mélange d'au moins 3 polyols.

La quantité (en poids) de polyols dans la composition est comprise entre 0,1 et 15%, de préférence entre 0,1 et 10%, et de manière particulièrement préférée entre 0,1 et 5%.

Outre la durée d'action, l'efficacité d'une composition désactivante est également améliorée lorsque sa viscosité est augmentée après addition d'un composé épaississant ou « modificateur de rhéologie ». Cette augmentation de la viscosité permet de limiter la dispersion irrégulière de la composition. C'est ainsi le cas lorsque la surface d'application n'est pas horizontale ou lorsque la planéité de celle-ci n'est pas satisfaisante. L'épaisseur régulière de la composition ainsi obtenue permet d'obtenir une désactivation elle aussi régulière et une couche superficielle constante de béton non durci.

L'ajout de modificateurs de rhéologie est connu dans l'art antérieur. Pour autant les modificateurs de rhéologie, utilisés dans l'art antérieur, augmentent la viscosité de la composition dès leur introduction dans la formulation. Ainsi, les composés épaississants utilisés dans l'art antérieur sont utilisés à de faibles concentrations, de l'ordre de 1% ou moins, pour permettre une pulvérisation correcte de la composition. Pour autant, cette faible concentration ne permet pas d'éviter convenablement les problèmes de coulures de la composition après son application. Dès lors, la couche superficielle de béton non durci obtenue après application de telles compositions est inconstante.

La demande EP 1281698 A1 a pu mettre en évidence que l'addition à la formulation d'un agent modificateur de rhéologie de type HASE (émulsion soluble dans les alcalis, d'un polymère à modification hydrophobe), permet d'obtenir une transition de la composition d'un état liquide peu visqueux à un état liquide très visqueux lors du contact avec le béton frais. En effet, la nature chimique différente de ce modificateur de rhéologie ne modifie pas la rhéologie du mélange initial, mais entraîne une augmentation de la viscosité de la composition au contact du béton frais de pH basique. Ceci permet d'obtenir une bonne pulvérisation de la composition ainsi qu'un état de surface régulier et esthétique du béton après désactivation quelle que soit la nature de la surface d'application de la composition.

Pour autant, les concentrations de HASE utilisées dans la demande EP 1281698 A1 sont comprises entre 0,5 et 10%.

La Demanderesse a pu maintenant mettre en évidence qu'à une concentration importante, un modificateur de rhéologie de type HMASE (émulsion aqueuse, soluble dans les alcalis, d'une résine acrylique à modification hydrophobe) joue également le rôle de « produit de cure », qui dans l'art antérieur était généralement une résine solubilisée dans un solvant aliphatique ou des compositions aqueuses à base de latex de type styrène butadiène, et dont la fonction est de limiter le dessèchement du béton avant le « délavage » par la formation d'un film.

Selon un mode de réalisation préféré de l'invention, la composition désactivante de surface pour béton ou mortier comprend également un modificateur de rhéologie de type HMASE dont la concentration est de préférence comprise entre 20 et 50%, préférentiellement entre 30 et 40%.

Avantageusement, le modificateur de rhéologie de type HMASE peut être constitué soit par des homopolymères obtenus à partir de l'acide acrylique, de l'acide méthacrylique ou de l'acrylamide, soit par des copolymères des mêmes monomères avec en plus des esters acryliques en proportions diverses.

Avantageusement encore, la composition désactivante de surface pour béton ou mortier comprend également une huile en émulsion aqueuse. En effet, le mélange huile de coupe et modificateur de rhéologie permet d'obtenir une efficacité optimale en tant que produit de cure.

A titre d'exemple de telles huiles, on peut citer notamment les huiles paraffiniques légères.

De préférence, la concentration d'huile de coupe dans la composition selon l'invention est comprise entre 5 et 10%.

Avantageusement, la composition selon l'invention comprend en outre au moins un composé antimousse pour empêcher la composition de mousser lors de la production et du conditionnement de la composition.

Avantageusement, la composition selon l'invention comprend en outre au moins un composé pour empêcher la croissance des microorganismes.

La présente invention porte également sur un procédé de désactivation de la surface d'un béton ou d'un mortier durant sa prise, comprenant une étape d'application d'une composition désactivante selon l'invention dans des proportions de l'ordre de 0,20 ± 0,05 litres par mètre carré de ladite surface, et une étape de lavage à l'eau de cette surface après une période déterminée.

La présente invention a également pour objet l'utilisation d'une composition selon l'invention pour désactiver la couche superficielle d'un béton ou d'un mortier frais.

La composition selon l'invention peut être utilisée pour la désactivation de béton ou de mortier réalisés avec tout type de ciment, en particulier des ciments de type CEM I ou CEM II.

Enfin, la présente invention porte également sur l'utilisation d'un tensio-actif non ionique pour la préparation d'une composition désactivante de surface pour béton ou mortier selon l'invention.

La présente invention sera mieux comprise à l'aide des exemples qui suivent. Ces exemples sont fournis à titre illustratif et ne sauraient limiter en aucun cas la portée de la présente invention.

### Exemple 1 :

Diverses planches de béton présentant la composition suivante (en kg/m³) ont été soumises à différents tests de désactivations.

| | | |
|---|---|---|
| Ciment CEM I 42,5 | 350 | kg |
| Sable 0/5 mm | 770 | kg |
| Gravier 5/20 mm | 980 | kg |
| Plastifiant | 1,5 | kg |
| Eau | 165 | kg |

Les constituants ont été introduits dans un malaxeur de 90 litres. Après une étape de pré-homogénéisation, l'eau a été introduite. Le malaxage a été prolongé encore 5 minutes puis le béton a été coulé dans des moules de 130 cm x 120 cm x 2 cm.

Une fois le béton étalé au moyen d'une règle métallique, il a été taloché de façon à obtenir une surface parfaitement lisse et une même orientation des graviers.

Immédiatement après avoir lissé le béton, une couche de la composition désactivante a été appliquée à l'aide d'un pulvérisateur manuel.

La formule de la composition désactivante utilisée est la suivante (proportions exprimées en pourcentages en poids):

| | |
|---|---|
| Glucose | 1 |
| Ethoxylate aromatique | 0,5 |
| Polyétherpolyol | 1,5 |
| HMASE | 35 |
| Huile en émulsion | 7 |
| Bentone | 1 |
| Biocide | 0,5 |
| Antimousse | 1 |
| Eau | compléter à 100 |

Dans cet exemple comme dans tous les exemples suivants, la HMASE utilisée comprend un même extrait sec égal à 30%.

La quantité de composition désactivante appliquée était de 0,19 litres par mètre carré. La température était de 17°C au moment du test avec un taux d'humidité important.

A différents temps, une étape de délavage a été effectuée en appliquant un jet d'eau sous pression sur la plaque de béton enduite de désactivant. Les résultats obtenus sont résumés dans le tableau II ci-dessous.

**Tableau II**

| jour après le coulage du béton | Résultats obtenus |
|---|---|
| 1 | + |
| 2 | ++ |
| 5 | ++ |
| 7 | ++ |

Légendes du tableau :
- pas de retrait de la couche superficielle
-/+ retrait de la couche superficielle et du corps du béton, l'aspect est irrégulier avec une profondeur importante.
+ retrait de la couche superficielle sans résistance, aspect irrégulier
++ retrait de la couche superficielle sans résistance, aspect régulier et homogène

Les résultats montrent que la composition de désactivation utilisée permet d'obtenir une surface gravillonnée de profondeur constante après nettoyage de la couche superficielle. La durée d'action de la composition désactivante est comprise entre un jour et au moins sept jours.

### Exemple 2 :

Le protocole utilisé pour la préparation du béton est le même qu'à l'exemple 1. La formule de la composition désactivante utilisée est la suivante (proportions exprimées en pourcentages en poids):

| | |
|---|---|
| Saccharose | 3 |
| Ethoxylate aromatique | 1 |
| Polyétherpolyol | 3 |
| HMASE | 35 |
| Huile en émulsion | 7 |
| Bentone | 1 |
| Biocide | 0,5 |
| Antimousse | 1 |
| Eau | compléter à 100 |

La quantité de composition de désactivant appliquée était de 0,22 litres par mètre carré. La température était de 22°C au moment du test avec des rafales de vent importantes.

A différents temps, une étape de délavage a été effectuée en appliquant un jet d'eau sous pression sur la plaque de béton enduite de désactivant. Les résultats obtenus sont résumés dans le tableau III ci-dessous.

**Tableau III**

| jour après le coulage du béton | Résultats obtenus |
|---|---|
| 1 | + |
| 2 | ++ |
| 5 | ++ |
| 10 | ++ |

Les résultats montrent que la composition de désactivation utilisée permet d'obtenir une surface gravillonnée de profondeur constante après nettoyage de la couche superficielle. La durée d'action de la composition désactivante est comprise entre un jour et au moins dix jours.

### Exemple 3 (comparatif) :

Le protocole utilisé pour la préparation du béton est le même qu'à l'exemple 1. La formule de la composition désactivante, selon l'art antérieur, utilisée est la suivante (proportions exprimées en pourcentages en poids) :

| | |
|---|---|
| Latex SBr(=styrène/butadiene rubber) | 10 |
| Gluconate de Na | 5 |
| HMASE | 3 |
| Huile en émulsion | 7 |
| Biocide | 0,5 |
| Antimousse | 1 |
| Eau | compléter à 100 |

La quantité de composition de désactivant appliquée était de 0,25 litres par mètre carré. La température extérieure était inférieure à 10°C au moment du test.

A différents temps, une étape de délavage a été effectuée en appliquant un jet d'eau sous pression sur la plaque de béton enduite de désactivant. Les résultats obtenus sont résumés dans le tableau IV ci-dessous.

**Tableau IV**

| jour après le coulage du béton | Résultats obtenus |
|---|---|
| 0,75 | -/+ |
| 1 | ++ |
| 2 | + |
| 3 | - |
| 5 | - |
| 7 | - |

Les résultats montrent que la composition de désactivation utilisée permet d'obtenir une surface gravillonnée de profondeur constante après nettoyage de la couche superficielle. Toutefois, la durée d'action de cette composition désactivante est très limitée dans le temps et la plage pour effectuer l'étape de délavage est comprise entre le 1^{er} et le 2^{ème} jour après application de la composition.

### Exemple 4 :

Le protocole utilisé pour la préparation du béton est le même qu'à l'exemple 1. La formule de la composition désactivante utilisée est la suivante (proportions exprimées en pourcentages en poids):

| | |
|---|---|
| Glucose | 3 |
| Ethoxylate aromatique | 1 |
| Polyétherpolyol | 3 |
| HMASE | 35 |
| Huile en émulsion | 7 |
| Bentone | 1 |
| Biocide | 0,5 |
| Antimousse | 1 |
| Eau | compléter à 100 |

La quantité de composition de désactivant appliquée était de 0,2 litres par mètre carré. Les conditions de températures étaient les mêmes que celles de l'exemple 3.

Une étape de délavage a été effectuée en appliquant un jet d'eau sous pression sur la plaque de béton enduite de désactivant aux mêmes intervalles de temps que dans l'exemple 3. Les résultats obtenus sont résumés dans le tableau V ci-dessous.

**Tableau V**

| jour après le coulage du béton | Résultats obtenus |
|---|---|
| 0,75 | -/+ |
| 1 | ++ |
| 2 | ++ |
| 3 | ++ |
| 5 | ++ |
| 7 | ++ |

Les résultats montrent que la composition de désactivation utilisée permet d'obtenir une surface gravillonnée de profondeur constante après nettoyage de la couche superficielle comme c'est le cas pour la composition de l'art antérieur. Toutefois, la durée d'action de la composition désactivante selon l'invention est bien plus importante à une température inférieure à 10°C que celle de l'art antérieur. En effet, cette durée d'action est comprise entre un jour et au moins sept jours pour la composition selon l'invention, alors que la durée d'action de la composition de l'art antérieur est limitée à la plage de 24 à 48 heures.

### Exemple 5 :

Dans cet exemple, un mortier « prêt à gâcher » CHAPDUR DECOR DESACTIVE® (SIKA) a été préparé selon les instructions du fabricant. Des planches de béton ont été coulées avec ce mortier selon le même mode opératoire que dans l'exemple 1. La formule de la composition désactivante utilisée est la suivante (proportions exprimées en pourcentages en poids):

| | |
|---|---|
| Sirop de Glucose | 6 |
| Ethoxylate aromatique | 2 |
| Polyétherpolyol | 5 |
| HMASE | 37 |
| Huile en émulsion | 7 |
| Bentone | 1,5 |
| Biocide | 0,5 |
| Antimousse | 1 |
| Eau | compléter à 100 |

Immédiatement après avoir lissé le béton, une couche de la composition désactivante est appliquée à l'aide d'un pulvérisateur à air comprimé. La quantité appliquée est de 0,27 litres par mètre carré. La température était de 34°C au moment du test.

A différents temps, une étape de délavage a été effectuée en appliquant un jet d'eau sous pression sur la plaque de béton enduite de désactivant. Les résultats obtenus sont résumés dans le tableau VI ci-dessous.

**Tableau VI**

| jour après le coulage du béton | Résultats obtenus |
|---|---|
| 1 | + |
| 2 | ++ |
| 5 | ++ |
| 16 | ++ |

Les résultats montrent que la composition de désactivation utilisée permet d'obtenir une surface gravillonnée de profondeur constante après nettoyage de la couche superficielle. La durée d'action de la composition désactivante est comprise entre un jour et au moins seize jours.

### Exemple 6 :

Diverses planches de béton, présentant la composition suivante (en kg/m³), ont été soumises à différents tests de désactivations.

| | | |
|---|---|---|
| Ciment CEM I 42,5 | 500 | kg |
| Sable 0/3 mm | 1500 | kg |
| Plastifiant | 2 | kg |
| Eau | 230 | kg |

Les constituants ont été introduits dans un malaxeur de 90 litres. Après une étape de pré-homogénéisation, l'eau a été introduite. Le malaxage a été prolongé encore 5 minutes puis le béton a été coulé dans des moules de 50 cm x 100 cm x 2 cm.

Une fois le béton étalé au moyen d'une règle métallique, il a été taloché de façon à obtenir une surface parfaitement lisse.

Immédiatement après avoir lissé le béton, une couche de la composition désactivante a été appliquée à l'aide d'un pulvérisateur manuel.

La formule de la composition désactivante utilisée est la suivante (proportions exprimées en pourcentages en poids) :

| | |
|---|---|
| N-acétyl aminophénol | 0,4 |
| Alkyl phénol éthoxylé | 0,5 |
| Polyéther polyol et polyester polyol | 3 |
| HMASE | 30 |
| Huile en émulsion | 9 |
| Biocide | 0,5 |
| Antimousse | 1 |
| Eau | compléter à 100 |

La quantité de composition désactivante appliquée était comprise entre 0,20 et 0,25 litres par mètre carré. L'ensemble de l'essai a été effectué à l'intérieur du laboratoire, à une température comprise entre 18 et 22°C.

A différents temps, une étape de délavage a été effectuée en appliquant un jet d'eau sous pression sur la plaque de béton enduite de désactivant. Les résultats obtenus sont résumés dans le tableau VII.

### Exemple 7 :

Le protocole utilisé pour la préparation du béton est le même qu' à l'exemple 6. La formule de la composition désactivante utilisée est la suivante (proportions exprimées en pourcentages en poids):

| | |
|---|---|
| N-acétyl aminophénol | 0,4 |
| Alkyl phénol éthoxylé | 1 |
| Polyéther polyols | 3 |
| HMASE | 30 |
| Huile en émulsion | 9 |
| Biocide | 0,5 |
| Antimousse | 1 |
| Eau | compléter à 100 |

Les conditions d'application et de lavage pour cette composition étaient les mêmes que celles de l'exemple 6. Les résultats obtenus sont résumés dans le tableau VII.

### Exemple 8 :

Le protocole utilisé pour la préparation du béton est le même qu'à l'exemple 6. La formule de la composition désactivante utilisée est la suivante (proportions exprimées en pourcentages en poids):

| | |
|---|---|
| N-acétyl aminophénol | 0,8 |
| Stéarate oxypropyléné | 1 |
| Polyéther polyol et polyester polyol | 3 |
| HMASE | 35 |
| Huile en émulsion | 9 |
| Biocide | 0,5 |
| Antimousse | 1 |
| Eau | compléter à 100 |

Les conditions d'application et de lavage pour cette composition étaient les mêmes que celles de l'exemple 6. Les résultats obtenus sont résumés dans le tableau VII.

### Exemple 9 :

Le protocole utilisé pour la préparation du béton est le même qu'à l'exemple 6. La formule de la composition désactivante utilisée est la suivante (proportions exprimées en pourcentages en poids):

| | |
|---|---|
| Gluconate de Na | 3 |
| Alkyl phénol éthoxylé | 0,5 |
| Polyéther polyol et polyester polyol | 2 |
| HMASE | 35 |
| Huile en émulsion | 9 |
| Biocide | 0,5 |
| Antimousse | 1 |
| Eau | compléter à 100 |

Les conditions d'application et de lavage pour cette composition étaient les mêmes que celles de l'exemple 6. Les résultats obtenus sont résumés dans le tableau VII.

### Exemple 10 :

Le protocole utilisé pour la préparation du béton est le même qu'à l'exemple 6. La formule de la composition désactivante utilisée est la suivante (proportions exprimées en pourcentages en poids):

| | |
|---|---|
| Gluconate de Na | 5 |
| Stéarate oxypropyléné | 1 |
| Polyéther polyols | 3 |
| HMASE | 35 |
| Huile en émulsion | 9 |
| Biocide | 0,5 |
| Antimousse | 1 |
| Eau | compléter à 100 |

Les conditions d'application et de lavage pour cette composition étaient les mêmes que celles de l'exemple 6. Les résultats obtenus sont résumés dans le tableau VII ci-dessous.

**Tableau VII**

| jour après le coulage du béton | Résultats obtenus | | | | |
|---|---|---|---|---|---|
| | Ex 6 | Ex 7 | Ex 8 | Ex 9 | Ex 10 |
| 2 | ++ | ++ | ++ | ++ | ++ |
| 5 | ++ | ++ | ++ | ++ | ++ |
| 8 | ++ | ++ | ++ | ++ | ++ |

Les résultats montrent que les compositions de désactivation utilisées dans les exemples 6 à 10 permettent d'obtenir une surface sablonnée de profondeur constante après nettoyage de la couche superficielle. La durée d'action des compositions désactivantes est comprise entre deux jour et au moins huit jours.

## Revendications

1. Composition désactivante de surface pour béton ou mortier comprenant au moins un retardateur superficiel, **caractérisée en ce qu'**elle comprend en outre au moins un tensio-actif non ionique.

2. Composition selon la revendication 1, **caractérisée en ce que** le tensio-actif non ionique est choisi parmi les esters de polyéthylène glycols, les esters d'acides gras, les éthoxylates (éthers polyoxyéthylénés ou polypropylénés d'alcools gras ou d'acides gras), les esters du saccharose, du sorbitol et du pentaerythritol et enfin les dérivés oxyéthylènes ou propylènes des amines, des amides, des amino-alcools et des esters d'acides gras

3. Composition selon l'une quelconque des revendications précédentes, **caractérisée en ce que** le retardateur superficiel est choisi parmi un phosphate, un aminophénol, un hydrate de carbone, un acide ou un sel d'acide carboxylique ou hydrocarboxylique, tel que l'acide gluconique ou glucoheptonique, le gluconate ou le glucoheptonate de sodium.

4. Composition selon l'une des revendications précédentes, **caractérisée en ce que** la quantité (en poids) de tensio-actif non ionique dans la composition est comprise entre 0,2 et 5%, de préférence entre 0,3 et 3%.

5. Composition selon l'une des revendications précédentes, **caractérisée en ce que** la quantité (en poids) de retardateur superficiel dans la composition est comprise entre 0,05 et 25%, de préférence entre 0,1 et 15%.

6. Composition selon l'une des revendications précédentes, **caractérisée en ce qu'**elle comprend en outre au moins un polyol.

7. Composition selon l'une des revendications précédentes, **caractérisée en ce que** le polyol est choisi parmi un polyéther polyol, un polyéther polyol modifié contenant une polyurée ou un polyuréthanne en dispersion, un polyéther modifié polyvinyl, un polyester polyol, un polycarbonate polyol, un polycaprolactone polyol ou un glycol.

8. Composition selon la revendication 7, **caractérisée en ce que** le polyol est choisi parmi un diol et un triol.

9. Composition selon l'une des revendications précédentes, **caractérisée en ce que** la quantité (en poids) de polyols dans la composition est comprise entre 0,1 et 15%, de préférence entre 0,1 et 10%.

10. Composition selon l'une des revendications précédentes, **caractérisée en ce qu'**elle comprend en outre une émulsion aqueuse, soluble dans les alcalis, d'une résine acrylique à modification hydrophobe (HMASE) en tant que modificateur de rhéologie.

11. Composition selon la revendication 10, **caractérisée en ce que** la concentration de modificateur de rhéologie de l'émulsion dans la composition est comprise entre 20 et 50%, de préférence entre 30 et 40%.

12. Composition selon l'une quelconque des revendications précédentes, **caractérisée en ce qu'**elle comprend en outre une huile de coupe.

13. Composition selon la revendication 12, **caractérisée en ce que** la concentration en huile de coupe dans la composition est comprise entre 5 et 10%.

14. Procédé de désactivation de la surface d'un béton ou d'un mortier durant sa prise, comprenant une étape d'application d'une composition désactivante selon l'une quelconque des revendications 1 à 13 dans des proportions de l'ordre de 0,20 ± 0,05 litres par mètre carré de ladite surface, et une étape de lavage à l'eau de cette surface après une période déterminée.

15. Utilisation d'un tensio-actif non ionique pour la préparation d'une composition désactivante de surface pour béton ou mortier, **caractérisée en ce que** ladite composition est telle que définie dans l'une quelconque des revendications 1 à 13.
